**Europäisches Patentamt**

**European Patent Office**

**Office européen des brevets**

(19)

(11) Numéro de publication : **0 366 518 B1**

(12) # FASCICULE DE BREVET EUROPEEN

(45) Date de publication du fascicule du brevet :
**25.03.92 Bulletin 92/13**

(51) Int. Cl.$^5$ : **B60R 22/04, A44B 11/25**

(21) Numéro de dépôt : **89402796.0**

(22) Date de dépôt : **10.10.89**

(54) **Ceinture de sécurité passive gonflable à bouclage automatique.**

(30) Priorité : **27.10.88 FR 8814051**

(43) Date de publication de la demande :
**02.05.90 Bulletin 90/18**

(45) Mention de la délivrance du brevet :
**25.03.92 Bulletin 92/13**

(84) Etats contractants désignés :
**BE DE ES GB IT NL SE**

(56) Documents cités :
**DE-A- 3 702 976**
**FR-A- 2 197 320**
**FR-A- 2 213 783**
**FR-A- 2 225 012**
**US-A- 3 190 694**
**US-A- 4 160 565**

(73) Titulaire : **CESA COMPAGNIE EUROPEENNE DE SIEGES POUR AUTOMOBILES**
**20, rue Paul-Vaillant-Couturier**
**F-92300 Levallois-Perret (FR)**

(72) Inventeur : **Colin, Pierre**
**2, Rue des Fontenis**
**F-25350 Mandeure (FR)**
Inventeur : **Fourrey, François**
**34, Rue du Petit Chênois**
**F-25200 Montbeliard (FR)**

(74) Mandataire : **Mestre, Jean et al**
**c/o CABINET LAVOIX 2, place d'Estienne d'Orves**
**F-75441 Paris Cédex 09 (FR)**

EP 0 366 518 B1

## Description

La présente invention concerne les ceintures de sécurité passives gonflables à bouclage automatique pour sièges de véhicules notamment automobiles terrestres.

Comme on le sait, les pouvoirs publics imposent d'équiper les sièges des véhicules, notamment terrestres ou aériens, de ceintures de sécurité.

Pour les véhicules automobiles on a déjà proposé de munir leurs sièges de ceintures de sécurité passives. Ce type de ceinture de sécurité comprend, habituellement, deux sangles indépendantes dont l'une des extrémités est reliée à un enrouleur. L'une de ces sangles se présente à la manière d'un baudrier qui repose sur le thorax de l'occupant et l'autre sangle prend appui sur l'abdomen de ce dernier. Alors que la sangle abdominale doit être attachée ou fermée manuellement, la sangle thoracique est mise en place automatiquement. Pour ce faire la sangle thoracique est fixée à un point d'ancrage supérieur de la paroi latérale de la structure du véhicule, par exemple à la portière, et à un point d'ancrage inférieur, relié habituellement à la glissière du siège selon l'axe médian du véhicule. Cette sangle thoracique est bouclée en permanence et le point d'ancrage supérieur est mobile, qu'il soit porté par la portière ou un support mobile qui se déplace dans un guide placé au-dessus de la portière du véhicule. Lors de la fermeture de la portière, le brin thoracique vient reposer automatiquement contre la poitrine de l'occupant, le point d'ancrage supérieur se déplaçant avec la portière ou son support mobile.

Une autre technique qui a été proposée consiste en une ceinture de sécurité à sangles gonflables. Une solution de ceinture de sécurité de ce type est exposée dans la demande de brevet français FR-A-2 465 615. Selon ce document, la ceinture de sécurité comprend soit une sangle ventrale soit une sangle pectorale qui est faite de deux éléments distincts. Chacun de ces éléments se présente à la manière d'un tube étanche gonflable à l'aide d'un fluide par exemple gazeux. Chaque élément se trouve normalement, à l'état de repos, enroulé sur lui-même et lorsqu'une personne prend place sur le siège, la présence de celle-ci déclenche le gonflage de chacun des deux éléments. Ceux-ci se déroulent alors et se déploient à la manière d'un objet de cotillons bien connu, habituellement dénommé "sans-gène ou langue de belle-mère", utilisé aussi bien par les enfants que les adultes pour animer joyeusement les réunions auxquelles ils participent. Comme on le sait, cet objet de cotillon se compose d'un embout bucal prolongé par un tube en cul de sac étanche muni d'un ressort de rappel qui le maintien normalement enroulé en spires jointives. Lorsqu'on souffle dans l'embout, le tube se gonfle et se déroule tout en se détendant brusquement en direction du convive visé. Ces deux éléments de la sangle ainsi déployés qui se trouvent à portée de mains de l'occupant, lui occasionnent une gène qui le conduit alors à boucler manuellement la ceinture.

Pour se libérer de la ceinture qui s'est ainsi présentée à lui afin qu'il la boucle ou attache manuellement, l'occupant doit au préalable la dégonfler. On comprend donc que cette ceinture qui rappelle à l'occupant qui a pris place sur un siège qu'il doit attacher sa ceinture, n'est pas d'un fonctionnement automatique et de plus est nécessairement génant puisque c'est l'inconfort que crée la ceinture déployée qui doit obligatoirement conduire l'occupant à la boucler.

Le but de l'invention est de fabriquer une ceinture de sécurité passive gonflable à bouclage automatique pour siège de véhicule notamment terrestre, qui ne présente pas ce genre d'inconvévients.

L'invention a pour objet une ceinture de sécurité passive gonflable à enrouleur et à bouclage automatique à l'aide d'une boucle avec pène et gâche qui est destinée à retenir un occupant assis sur son siège monté sur une structure une fois la boucle fermée. Cette ceinture de sécurité est remarquable en ce qu'elle comprend une sangle unique faite d'un ruban flexible résistant mécaniquement ainsi que d'une enveloppe souple et continue étanche à un fluide et déployable sous la pression de ce dernier qui est associée à ce ruban sur au moins la partie de celui-ci la plus éloignée de l'enrouleur et dont cette partie où enveloppe et ruban sont présents est divisée en un brin thoracique et en un brin abdominal qui sont séparés par le pène de la boucle, des dispositifs d'amarrage pour relier l'une des extrémités de la sangle à l'enrouleur et l'autre des extrémités de celle-ci à l'un de ces siège et structure et pour ancrer la gâche de la boucle à l'un de ces derniers, des moyens de mise en pression pour gonfler ou dégonfler cette enveloppe et une unité de commande pour faire fonctionner ces moyens de mise en pression de manière, que lorsqu'un occupant s'est assis sur son siège, l'unité de commande déclenche le fonctionnement des moyens de mise en pression pour gonfler l'enveloppe et dérouler la sangle qui en se déployant progressivement entoure l'occupant et dirige le pène de la boucle vers la gâche de celle-ci afin qu'il s'y accroche automatiquement et de manière que, lorsque le pène et la gâche de la boucle sont accrochés l'un à l'autre, l'unité de commande arrête le fonctionnement des moyens de mise en pression pour dégonfler l'enveloppe afin que l'enrouleur tende la sangle pour l'appliquer contre l'occupant. L'invention a donc pour objet une ceinture du type divulguée par FR-A-2 213 783 et est caractérisée en ce que le pène, formé directement sur la sangle, fait corps avec celle-ci et présente, lorsque l'enveloppe de la sangle est gonflée, une configuration en oméga obtenue par couture de l'enveloppe.

D'autres caractéristiques de l'invention ressortiront de la lecture de la description et des revendications qui suivent et de l'examen du dessin annexé, donné seulement à titre d'exemple où :

– la Fig.1 est une vue perspective partielle d'un mode de réalisation d'une sangle de ceinture de sécurité selon l'invention;

– les Figs.2A et 2B sont des sections transversales du mode de réalisation de la Fig.1 respectivement à l'état dégonflé et à l'état gonflé ;

– la Fig.3 est vue schématique d'un mode de réalisation d'une gâche de boucle de ceinture de sécurité selon l'invention ;

– la Fig.4 est une vue latérale schématique d'un mode de réalisation d'un enrouleur de ceinture de sécurité selon l'invention ;

– les Fig.5A, 5B, 5C et 5D sont des vues perspectives schématiques illustrant le fonctionnement d'une ceinture de sécurité selon l'invention dans différentes phases de sa mise en oeuvre ;

– la Fig.6 est une vue analogue à celle de la Fig.5C d'un autre mode de réalisation d'une ceinture de sécurité selon l'invention ; et

– la Fig.7 est une vue schématique illustrant les moyens de mise en pression et l'unité de commande de la ceinture de sécurité selon l'invention.

Les ceintures de sécurité notamment pour véhicules automobiles terrestres étant bien connues dans la technique, on ne décrira dans la suite que ce qui concerne directement ou indirectement l'invention. Pour le surplus, le spécialiste du domaine technique considéré puisera dans les solutions classiques courantes à sa disposition pour faire face aux problèmes particuliers auxquels il est confronté.

Dans ce qui suit un même numéro de référence désigne toujours un même élément quel que soit le mode de réalisation de l'invention.

Comme cela ressort clairement de l'examen des figures du dessin, une ceinture de sécurité passive gonflable à rappel et bouclage automatiques selon l'invention comprend une boucle 10, un enrouleur 20 associé à un siège 30 ou à une structure 40 sur laquelle il est monté. Cette boucle 10 et cet enrouleur 20 sont destinés à être reliés par une sangle 50; cette sangle est fixée par des dispositifs d'amarrage 60, d'une part, à l'enrouleur et, d'autre part, à l'un de ces siège et structure. Des moyens de mise en pression 70, pour gonfler ou dégonfler la sangle, sont sous la dépendance d'une unité de commande 80.

Pour la commodité de l'exposé en décrira successivement chacun de ces constituants d'une ceinture de sécurité passive gonflable à rappel et bouclage automatiques selon l'invention avant d'en indiquer le fonctionnement.

Cette ceinture de sécurité est destinée à être associée à un siège 30 qui comprend, comme il est classique, une assise 31, un dossier 32 et s'il y a lieu un repose-tête ou têtière 33.

Ce siège 30 est habituellement monté dans une structure 40 telle que la coque ou la carrosserie d'un véhicule automobile. Cette structure 40 comprend par exemple une paroi latérale 41 ici seulement schématisée par le pied ou montant milieu situé entre les portières avant et arrière d'un véhicule automobile. Cette structure comprend aussi un plancher 42 sur lequel sont fixées des glissières 43 dont des éléments complémentaires coopérants sont montés pour partie sur celui-ci et pour partie sous l'assise du siège ; de cette manière il est possible de régler la position longitudinale du siège dans le véhicule comme il est classique.

L'enrouleur 20, auquel l'une des extrémités de la sangle de la ceinture est fixée, est destiné à rappeler automatiquement la sangle de manière à maintenir en permanence celle-ci sous une tension déterminée y compris lorsqu'un occupant est assis sur son siège. De cette manière la sangle est maintenue en permanence tendue contre le corps de l'occupant tout en lui permettant de bouger sans contrainte. Comme il est classique, un tel enrouleur à rappel élastique automatique est sous la dépendance d'un système de blocage à commande inertielle qui interdit de déroulement de la sangle en cas de décélération violente du véhicule ou d'accélération tangentielle importante de la sangle.

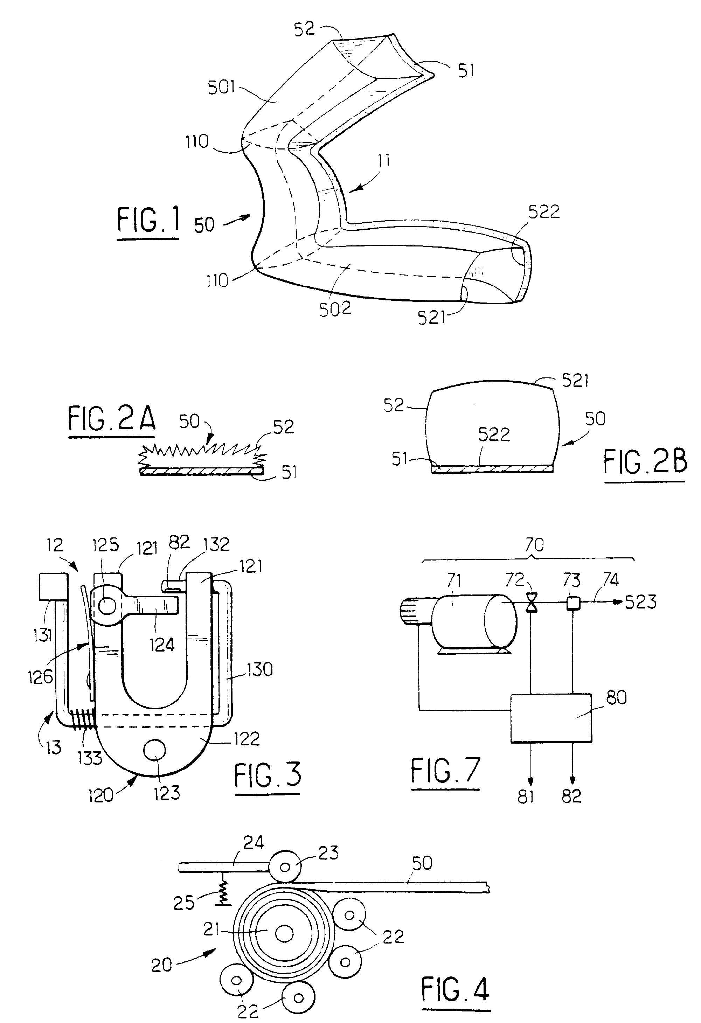

Comme on le voit en particulier sur la Fig.4, et pour les raisons qui apparaîtront par la suite, le mode de réalisation représenté schématiquement d'un enrouleur 20 comprend un tambour 21 soumis à un couple de rappel élastique comme il est connu, des galets supports 22 disposés à la périphérie de ce tambour et à distance de ce dernier, ainsi qu'un cylindre presseur 23. Ce cylindre 23 est porté par un levier 24 articulé à l'une de ses extrémités et monté de manière à pouvoir basculer. Ce levier 24 est sollicité par un ressort 25 de manière que le cylindre presseur soit normalement sollicité en direction du tambour 21. La sangle 50 est enroulée comme clairement illustré.

La boucle 10 comprend un pêne 11 sur lequel on reviendra en détail par la suite et qui résulte notamment d'une configuration spéciale obtenue par une structure particulière locale donnée à la sangle. Cette boucle comprend aussi une gâche 12. Cette gâche 12 comprend un corps 120 en U dont les deux branches 121 parallèles sont reliées par un pont 122 percé d'un trou 123 pour son ancrage, grâce à une technique classique et pour cela non illustrée afin de solidariser la gâche au siège 30 ou à la structure 40. Ce corps 120 porte un loquet 124 qui est monté basculant à l'aide d'un axe 125 et qui est rappelé élastiquement en position de fermeture par un ressort 126. Cette gâche comprend, aussi, un bouton 13 de commande d'ouverture. Ce bouton 13 comprend une tringle 130 ou analogue coudée approximativement en forme de C comme illustré à laquelle est fixé un poucier 131. Cette tringle 130 porte un arrêtoir 132 destiné à coopérer avec le loquet 124 et est soumise à l'action d'un ressort de rappel 133. Ce bouton de commande 13 est monté coulissant de toute manière appropriée classique sur le corps 120 de la gâche.

Tout ceci est illustré en détail, schématiquement sur la Fig.3.

Cette boucle 10 est normalement sollicitée dans la position de fermeture illustrée où l'arrêtoir 132 du bouton de commande retient le loquet 124 pour l'empêcher de basculer dans le sens opposé au pont 122. Lorsque le pène 11 est introduit entre les deux branches 121 du U et entre le pont 122 et le loquet 124, il ne peut donc s'en échapper. Pour libérer le pène 11 de la gâche 12 et ainsi pour ouvrir la boucle 10, il suffit de presser sur le poucier 131 pour faire reculer l'arrêtoir 132 qui se sépare alors du loquet 124 et le libère. Le loquet 124 peut alors basculer dans le sens opposé à celui des aiguilles d'une montre (Fig.3) sous la tension de la sangle ou une traction exercée sur celle-ci, dans le sens opposé au pont 122: le pène 11 est alors libre de sortir de la gâche 12 pour détacher la ceinture.

Comme cela apparaît en particulier sur la Fig.1 et les Fig.2A et 2B, une sangle 50 pour ceinture de sécurité selon l'invention comprend un ruban 51 inextensible et flexible ayant une très bonne résistance mécanique. C'est ce ruban qui en cas de collision supporte et transmet indirectement les efforts communiqués par l'occupant qui tend à quitter son siège, à la structure. L'une des extrémités de la sangle, par exemple de ce ruban 51, est fixée à l'enrouleur 20 plus spécialement à son tambour 21, et l'autre de ses extrémités est fixée à l'un de ces siège 30 ou structure 40 ; ces fixations sont faites à l'aide des dispositifs d'amarrage 60. A ce ruban 51, et plus particulièrement à la partie de celui-ci qui est la plus éloignée de l'enrouleur 20, est associée une enveloppe 52 tubulaire souple et étanche à un fluide de préférence gazeux, par exemple de l'air. Cette enveloppe 52 tubulaire, par exemple déployable élastiquement, se présente à l'état dégonflé comme illustré sur la section droite de la Fig.2A, et à l'état gonflé, cette enveloppe se présente comme illustré sur la Fig.2B. L'extrémité de cette enveloppe 52 qui est dirigée vers l'enrouleur 20 est fermée en cul de sac et son extrémité opposée est munie d'un embout sur lequel on reviendra par la suite. Comme on le voit, l'enveloppe 52 présente une paroi antérieure 521 et une paroi postérieure 522 qui est destinée à faire face au corps de l'occupant c'est-à-dire aussi au siège 30. Ces parois antérieure et postérieure ont des longueurs, dans le sens longitudinal ou dans le sens "chaîne" de la sangle, différentes: la longueur de la paroi postérieure 522 est plus courte que la longueur de la paroi antérieure 521 pour les raisons qui apparaîtront par la suite. De préférence, cette enveloppe 52 a une section droite transversale approximativement rectangulaire en position gonflée. Cette section transversale va, de préférence, en décroissant depuis l'extrémité comportant l'embout vers l'extrémité opposée où se trouve l'enrouleur.

La partie de la sangle 50 qui comprend à la fois le ruban 51 et l'enveloppe 52 est divisée en un brin thoracique 501 et un brin abdominal 502 par le pène 11 de la boucle.

Le pène 11 est formé directement sur la sangle 50. Comme on peut l'observer sur la Fig.1, lorsque l'enveloppe de la sangle est gonflée, ce pène se présente approximativement avec une configuration en oméga. Cette configuration spéciale est obtenue par une structure particulière locale de la sangle qui résulte de coutures 110, comme illustré. La manière dont on donne une forme précise déterminée notamment à un produit textile est bien connue en couture et il n'est pas nécessaire de s'y étendre plus amplement.

Les dispositifs d'amarrage 60 qui sont utilisés pour fixer l'une des extrémités de la sangle 50 à l'enrouleur 20 et l'autre des extrémités de celle-ci à l'un de ces siège 30 ou structure 40 sont classiques. Ils comprennent par exemple des tiges relativement rigides dont une extrémité est ancrée au siège ou à la structure et dont l'autre est munie par exemple de rivet ou analogue engagé dans un trou du corps 120 de la gâche 12 de la boucle 10 tel le trou 123 ; l'extrémité 60 de la sangle est munie d'une attache-ceinture classique fixée par exemple par une couture de force c'est-à-dire une piqûre en "grecques" ou en créneaux. On ne s'étendra donc pas plus amplement à propos de ces dispositifs d'amarrage.

Les moyens de mise en pression 70 pour gonfler ou dégonfler l'enveloppe 52 de la sangle 50 de la ceinture de sécurité selon l'invention comprennent, entre autres, un électrocompresseur 71, une vanne 72 d'admission, une soupape 73 de délestage et une canalisation 74. Cette canalisation 74 est destinée à être reliée à l'embout 523 de l'enveloppe 52 situé à l'extrémité de celle-ci qui est opposée à celle dirigée vers l'enrouleur. Ceci est schématisé sur la Fig.7.

L'unité de commande 80 comprend des capteurs piezo-sensibles 81 qui sont logés l'un dans l'assise 31 du siège 30 et l'autre soit dans le dossier 32 soit dans le repose-tête 33 de celui-ci. Ces capteurs 81 de tout type convenable approprié, sont destinés à détecter la présence d'un occupant sur le siège. Ils sont donc tarés de manière à réagir aux poids minimal et efforts d'une personne pouvant prendre place sur le siège compte-tenu par exemple des réglementations particulières applicables en ce qui concerne l'âge minimal des occupants des sièges avant. Ces capteurs 81, pour les raisons que l'on comprendra par la suite, sont associés de manière à constituer une porte exécutant la fonction logique ET pour déclencher la marche du compresseur 71.

Cette unité de commande 80 comprend, aussi, un détecteur de bouclage 82 qui est destiné à contrôler le verrouillage de la boucle 10 en présence du pène 11 enclenché dans la gâche 12 lorsqu'un occupant est effectivement sur le siège 30. Ce détecteur 82 déclenche l'arrêt de l'électrocompresseur 71, la fermeture de la vanne d'admission 72, l'ouverture de la soupape de délestage 73 pour provoquer le dégonflage de l'enveloppe 52 de la sangle 50. Ceci permettra à l'enrouleur 20 de rappeler la sangle 50 comme cela apparaîtra par la suite.

La sangle 50, comme exposé précédemment, comprend le ruban 51 résistant mécaniquement et l'enveloppe 52 tubulaire étanche. Ce ruban 51 est fait, par exemple d'une ceinture de sécurité classique par exemple en fibres de polyester tissées. L'enveloppe 52 étanche est faite, par exemple, de fibres inextensibles tissées comme connu de manière à être extensible et, éventuellement élastique, comme cela est courant. L'étanchéité est obtenue directement par le choix des fibres et de leur mode de tissage ou bien obtenue par enduction ou imprégnation avec une substance appropriée par exemple caoutchouteuse ou de résine convenable. Ce type d'enveloppe tubulaire étanche est classique et bien connu par exemple pour la confection de l'ossature ou charpente des tentes de camping gonflables. Cette enveloppe 52 est associée au ruban 51 par collage ou couture ou bien cette enveloppe est faite directement avec le ruban de manière à ce que les deux soient directement d'un seul tenant.

La partie de la sangle 50 qui comprend à la fois le ruban résistant mécaniquement et l'enveloppe tubulaire étanche est d'une dimension telle qu'elle est apte à envelopper l'occupant de la plus forte corpulence prévue tout en étant à distance du thorax et de l'abdomen de celui-ci, en position verrouillée de la boucle et à l'état gonflé de l'enveloppe comme on le comprendra par la suite.

La partie de la sangle avec ruban et enveloppe est souple de manière à pouvoir changer facilement de direction par cintrage ou coudage sur un renvoi de sangle classique voire à se bobiner sur le tambour de l'enrouleur. Le pène 11 entre brin abdominal 502 et brin thoracique 501 est apte à prendre la forme d'un oméga à l'état gonflé de l'enveloppe et à prendre une forme relativement rectiligne à l'état dégonflé de l'enveloppe. Ce pène ne constitue pas une solution de continuité ou interruption de l'enveloppe 52, un fluide qui y est peut passer de l'un à l'autre des deux brins. En outre, dans la zone du pène la sangle est renforcée de manière à ce qu'elle ne soit pas endommagée par son contact répété avec la gâche; un tel contact est susceptible de nuire à la conservation de la résistance mécanique du ruban et/ou de l'étanchéité de l'enveloppe.

Comme on l'a indiqué les parois frontales antérieure 521 et postérieure 522 de l'enveloppe 52 ont des longueurs développées, suivant l'axe longitudinal de la sangle, différentes, la longueur de la paroi postérieure 522 étant plus courte que celle de la paroi antérieure 521; ceci vaut aussi bien pour le brin thoracique 501 que pour le brin abdominal 502. De la sorte on comprend que, lorsque cette différence est convenablement choisie, quand l'enveloppe se gonfle les brins se courbent et prennent une concavité qui est alors dirigée vers le siège. En adoptant des valeurs convenablement choisies pour les longueurs et leurs différences, on comprend alors que lors du gonflage de l'enveloppe la sangle puisse se diriger automatiquement d'elle-même en direction de la gâche, le pène orienté vers celle-ci, tout en enveloppant le torse de l'occupant assis sur le siège et en pointant exactement le pène vers la gâche.

Comme indiqué, la section droite, par un plan transversal, de la sangle est telle que, à l'état gonflé le maître-couple de l'enveloppe va décroissant à partir de l'extrémité voisine de l'embout de manière à faciliter le gonflage et le dégonflage de l'enveloppe.

La boucle 10 est faite de tous matériaux appropriés parmi lesquels figurent les métaux et les matières plastiques; ceux-ci sont choisis pour que la boucle satisfasse aux normes imposées tant en ce qui concerne la résistance en position verrouillée qu'en ce qui concerne l'aptitude au déverrouillage lorsque la sangle est sous tension par exemple du fait du poids de l'occupant qui serait suspendu par la sangle dans le cas d'un véhicule ayant versé. Il n'est donc pas nécessaire de s'étendre plus longuement.

Le compresseur utilisé est, par exemple, entraîné par un moteur électrique alimenté par l'installation électrique de bord d'un véhicule. Ce compresseur est apte à développer par exemple une pression un peu supérieure à la pression atmosphérique, dont l'ordre de grandeur est comparable à celle nécessaire par exemple pour gonfler un matelas pneumatique. Suivant la longueur de sangle déployée avec l'enveloppe gonflable, la quantité d'air sous pression est comprise par exemple entre deux et cinq litres.

Le gonflage peut aussi être effectué grâce à un réservoir d'air comprimé muni d'un détendeur (5 à 6 litres, pression de 2 à 4 bars ou hPa).

La vanne d'admission, la soupape de délestage, la canalisation et embout sont de tout type classique courant du commerce.

L'unité de commande 80 qui comprend les capteurs piézo-sensibles 81 et le détecteur de bouclage 82 est, par exemple, constituée par un microcalculateur convenablement programmé. Ces capteurs et détecteur sont de tout type courant classique que l'on trouve facilement dans le commerce. La programmation d'un microcalculateur est bien connue des spécialistes en n'entre pas dans le cadre de l'invention.

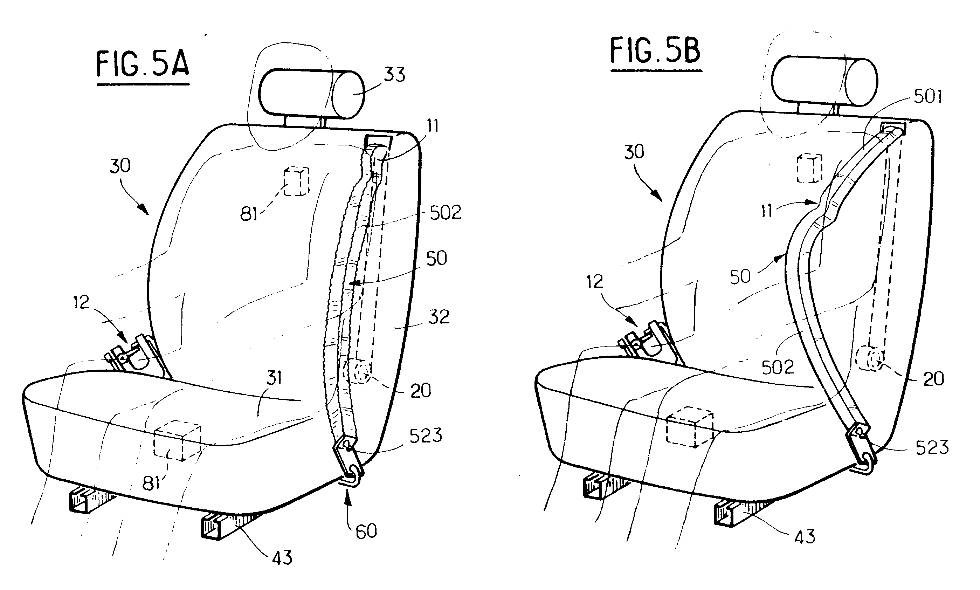

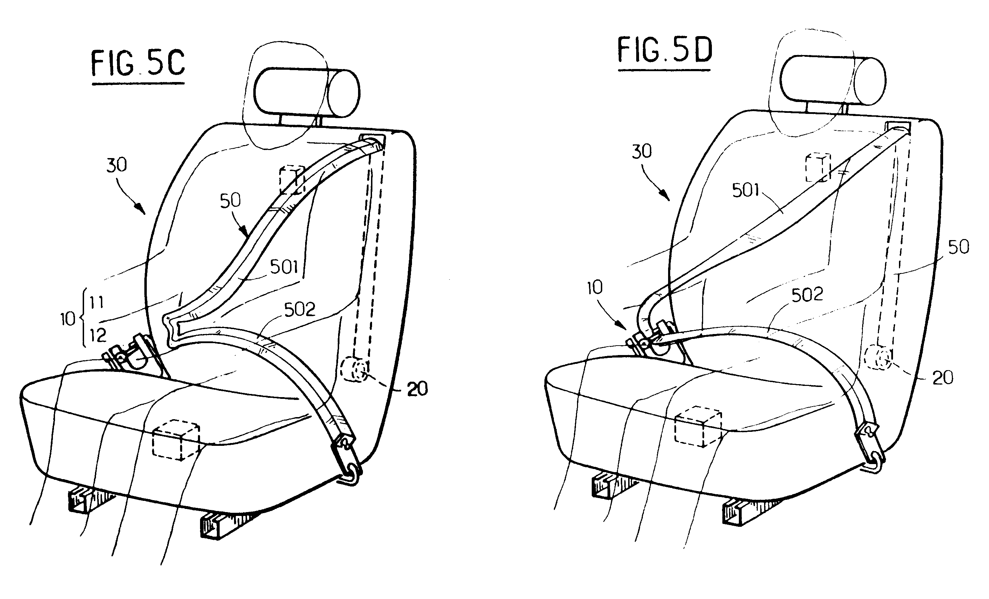

On décrira maintenant le fonctionnement d'un mode de réalisation de l'invention en se reportant aux diverses vues (A à D) de la Fig.5 qui illustrent différentes phases de la mise en oeuvre d'un ceinture de sécurité passive gonflable à rappel et bouclage automatiques selon l'invention. Dans ce mode de réalisation, on a dessiné une ceinture de sécurité selon l'invention qui, à l'exception des moyens de mise en pression 70 et de l'unité de commande 80, est incorporée au siège d'un véhicule de manière à faire corps avec ce dernier; de la sorte le siège peut être mis en place dans l'habitacle du véhicule avec sa ceinture de sécurité dont il est prééquipé, seuls restent à faire les branchements et raccordements électriques et/ou fluidiques.

Sur la Fig.5A on a représenté la ceinture de sécurité selon l'invention en position initiale. Comme on le voit, l'enveloppe de la sangle est à l'état dégonflé et la sangle est complètement rappelée et tendue par l'enrouleur.

Le contact électrique étant préalablement établi par exemple avec la clé de déverrouillage des portes ou avec la clé de contact, lorsqu'un occupant prend place sur le siège les capteurs 81 piézo-sensibles, qui sont logés l'un dans l'assise et l'autre soit dans le dossier soit dans le repose-tête, détectent sa présence.

L'unité de commande 80 déclenche alors l'ouverture de la vanne d'admission 72, la fermeture de la soupape de délestage 73 et la mise en marche de l'électrocompresseur 71; le compresseur alimente alors en fluide sous pression, par exemple de l'air, l'enveloppe par l'entremise de la canalisation 74 raccordée à l'embout 523. L'insufflation de fluide sous pression se faisant par l'extrémité de l'enveloppe qui est opposée à celle dirigée vers l'enrouleur et la section de l'enveloppe allant décroissant dans le même sens, on voit donc que d'abord ce qui est apparent de la sangle, essentiellement son brin abdominal, se gonfle sous la pression qui se développe dans l'enveloppe, puis la sangle se déroule progressivement à l'encontre de la sollicitation de l'enrouleur tout en continuant à se gonfler; la sangle commence à prendre la configuration illustrée sur la Fig.5B.

A mesure que la sangle se déplace, elle s'incurve et progresse en se dirigeant de manière que son pène soit orienté vers la gâche de la boucle. Les dimensions des brins thoracique et abdominal de même que l'incurvation propre qui leur est donnée du fait des différences de longueurs des parois antérieure et postérieure de l'enveloppe, font que la sangle passe à l'écart du torse de l'occupant puisque celles-ci ont été choisies pour tenir compte de la corpulence maximale supposée d'un occupant. Ceci est illustré sur la Fig.5C.

En fin de course, comme illustré sur la Fig.5D, le pène s'est engagé dans la gâche et s'y est verrouillé. Aussitôt que le détecteur de bouclage a constaté cette situation, il envoie un signal à l'unité de commande de manière à fermer la vanne d'admission, à arrêter l'électrocompresseur et à ouvrir la soupape de délestage. Ceci exécuté, l'enveloppe se dégonfle et de ce fait n'exerce plus de contrainte sur la sangle et cette dernière n'est plus alors soumise qu'à la tension exercée par l'enrouleur. Ce dernier peut alors agir sur la sangle pour la tendre en la rebobinant partiellement, de la quantité juste suffisante afin que les brins thoracique et abdominal soient appliqués contre le corps de l'occupant.

On comprend que le gonflage est facilité par le fait du changement de direction qu'assure un renvoi, de la sangle qui sort par le haut du dossier du siège et que le gonflage de l'enveloppe du brin thoracique ne se fait qu'à mesure que celui-ci apparaît. Comme indiqué précédemment, la structure du pène est telle qu'elle n'interrompt pas la continuité de l'enveloppe étanche de manière que l'air insufflé par l'embout puisse se propager au brin thoracique.

Selon un autre mode opératoire, pendant la phase de gonflage de l'enveloppe produisant le déroulement progressif de la sangle conduisant à l'accrochage automatique de la ceinture, l'effort de rappel de l'enrouleur peut être neutralié ou amoindri. Ceci peut être obtenu en faisant intervenir l'unité de commande.

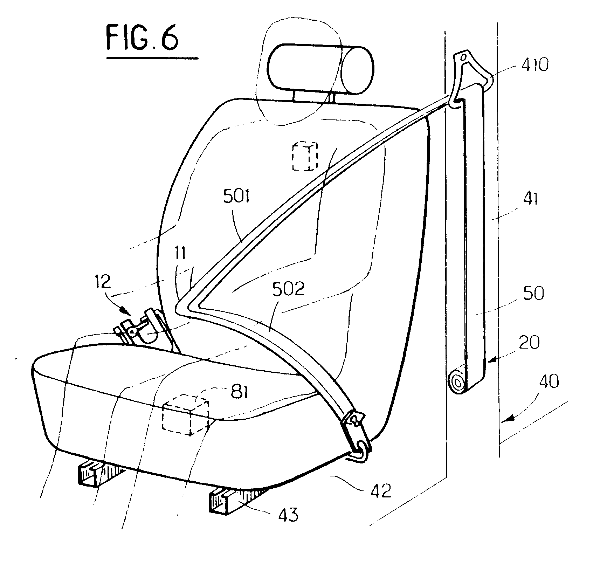

Sur la Fig.6 on a illustré une variante d'exécution du mode de réalisation de la ceinture de sécurité selon l'invention. Dans ce cas, la sangle et son enrouleur ne sont pas incorporés au siège mais associés à la structure du véhicule comme il est classique. Dans ce cas, on utilise un renvoi de sangle 410 fixé par exemple au pied milieu ou montant situé entre les portières avant et arrière d'un véhicule à quatre portes, comme cela est classique.

Pour purger l'enveloppe de l'air résiduel qui pourrait s'y trouver à la suite de son dégonflage, et qui gènerait le bobinage de la sangle sur le tambour de l'enrouleur, on utilise un cylindre presseur comme illustré sur la Fig.4 d'une manière schématique. En pressant ainsi sur la spire extérieure, à mesure de sa formation, contre les spires précédentes sous-jacentes comprimées entre le tambour et le cylindre presseur, on est sûr de bien chasser et expulser tout fluide résiduel.

On saisit tous les avantages et intérêts de l'invention. En outre, on comprendra qu'en choisissant le tarage des capteurs piézo-sensibles de l'assise et du dossier ou repose-tête on peut faire en sorte que la ceinture de sécurité passive gonflable à rappel et accrochage automatiques selon l'invention ne réagisse pas lorsqu'on dépose sur le siège un paquet relativement pesant.

**Revendications**

1. Ceinture de sécurité passive gonflable à enroulement (20) et bouclage automatique, à boucle (10) avec pène (11) et gâche (12), qui est destinée à retenir un occupant assis sur son siège (30) monté sur une structure (40) lorsque la boucle est fermée, où cette ceinture comprend une sangle unique qui est faite d'un ruban (51) flexible résistant mécaniquement et d'une enveloppe (52) souple, continue étanche à un fluide, déployable sous la pression du fluide et associée à ce ruban (51) sur au moins la partie de celui-ci la plus éloignée de l'enrouleur (20) et dont cette partie où enveloppe (52) et ruban (51) sont présents est divisée en un brin thoracique (501) et en un brin abdominal (502) séparés par le pène (11) de la boucle (10), des dispositifs d'amarrage (60) pour relier notamment l'une des extrémités de la sangle à l'enrouleur (20) et l'autre des extrémités de celle-ci à l'un de ces siège (30) et structure (40) et pour ancrer la gâche de la boucle à l'un de ces derniers, des moyens de mise en pression (70) pour gonfler ou dégonfler cette enveloppe (52) et une unité de commande (80) pour faire fonctionner ces moyens (70) de mise en pression de manière que, lorsque l'occupant à pris place sur son siège (30), l'unité de commande (80) déclenche le fonctionnement des moyens (70) de mise sous pression pour gonfler l'enveloppe (52) et dérouler la sangle (50) qui en se déployant entoure l'occupant et dirige le pène (11) de la boucle (10) vers la gâche (12) de celle-ci afin qu'il s'y accroche automatiquement et de manière que, lorsque le pène (11) et la gâche (12) de la boucle (10) sont accrochés l'un à l'autre, l'unité de commande (80) arrête le fonctionnement des moyens (70) de mise sous pression pour dégonfler l'enveloppe (52) afin que l'enrouleur (20) tende la sangle (50) pour l'appliquer contre l'occupant, ceinture caractérisée en ce que le pène (11) formé directement sur la sangle (50), fait corps avec celle-ci (50) et présente, lorsque l'enveloppe (52) de la sangle (50) est gonflée, une configuration en oméga obtenue par couture de l'enveloppe (52).

2. Ceinture selon la revendication 1, caractérisée en ce que l'enveloppe a une section droite transversale approximativement rectangulaire avec deux parois (521,522) opposées dont l'une (522) est destinés à être orientée vers le siège (30), en ce que ces parois ont en section longitudinale des longueurs différentes, celle (522) de ces parois (521,522) orientée vers le siège (30) ayant la longueur la plus courte de manière que l'enveloppe (52) étant gonflée, la sangle (50) présente ses deux brins (501,502) incurvés et avec une concavité qui est tournée vers le siège (30).

3. Ceinture selon la revendication 1 ou 2, caractérisée en ce que l'enveloppe (52) est rapportée sur le ruban (51).

4. Ceinture selon la revendication 1 ou 2, caractérisée en ce que l'enveloppe (52) est d'un seul tenant avec le ruban (51).

5. Ceinture selon l'une quelconque des revendications 2 à 4, caractérisée en ce que la section droite de l'enveloppe (52) va s'amincissant à partir de l'extrémité de la sangle (50) amarrée à l'un de ces siège (30) et structure (40).

6. Ceinture selon l'une quelconque des revendications 1 à 5, caractérisé en ce que l'enveloppe (52) est munie d'un embout (523) à son extrémité proche de celle de la sangle (50) amarrée à l'un de ces siège (30) et structure (40).

7. Ceinture selon l'une quelconque des revendications 1 à 6, caractérisée en ce que les moyens (70) comprennent un compresseur (71) électro-pneumatique, une vanne d'admission (72), une soupape de délestage (73) et une canalisation (74) reliée à l'enveloppe (52).

8. Ceinture selon l'une quelconque des revendications 1 à 7 où le siège (30) comprend une assise (31), un dossier (32) et s'il y a lieu un repose-tête (33), caractérisée en ce que l'unité de commande (80) comprend deux capteurs piezo-sensibles (81) associés l'un à l'assise (31) du siège (30) et l'autre à l'un de ces dossier (32) et repose-tête (33) et accouplés de manière à former une porte logique ET, et un détecteur de bouclage (82) associé à la boucle (10).

9. Ceinture selon l'une quelconque des revendications 1 à 8, caractérisée en ce que la gâche (12) de la boucle (10) comprend un corps (120) portant, d'une part, une loquet (124) basculant à rappel élastique destiné à retenir le pène (11) accroché sur la gâche (12) et un bouton de commande d'ouverture (13) à rappel élastique muni d'un arrêtoir (132) escamotable coopérant avec le loquet (124) pour le maintenir dans la position où ce dernier retient le pène (11) accroché sur la gâche (12).

10. Ceinture selon l'une quelconque des revendications 1 à 9, caractérisée en ce que l'enrouleur (20) comprend, entre autres, un tambour (21) pour recevoir la sangle (50), des galets supports (22) répartis à distance autour du tambour (21) pour supporter la sangle (50) entre eux et le tambour (21) et un cylindre presseur (23) destiné à être appliqué élastiquement contre la sangle (50) pour expulser de l'enveloppe (52) dégonflée le fluide qui s'y trouverait avant le bobinage de la sangle (50) sur le tambour (21).

11. Ceinture selon l'une quelconque des revendications 1 à 10, caractérisée en ce que l'enrouleur (20) et la gâche (12) de la boucle (10) sont fixés au siège (30).

12. Ceinture selon l'une quelconque des revendications 1 à 10, caractérisée en ce que l'enrouleur (20) et la gâche (12) de la boucle (10) sont fixées à la structure (40).

13. Ceinture selon l'une quelconque des revendications 1 à 10, caractérisée en ce que l'un de ces enrouleur (20) et gâche (12) de la boucle (10) est fixé au siège (30) et l'autre de ceux-ci est fixé à la structure (40).

**Patentansprüche**

1. Aufblasbarer passiver Sicherheitsgurt mit Aufroller (20) und selbsttätiger Anschnallung, mit Gurtschloß (10) mit Riegel (11) und Schließelement (12), der dafür vorgesehen ist, einen in seinem an einem Aufbau (40) befestigen Sitz sitzenden Fahrzeuginsassen (30) rückzuhalten, wenn das Gurtschloß geschlossen ist, wobei der Sicherheitsgurt einen einzigen Gurt, der aus einem flexiblen, mechanisch widerstandsfähigen Band (51) und einer nachgiebigen durchgehenden fluiddichten Hülle (52) aufgebaut ist, die unter dem Druck des Fluides ausgebreitet werden kann und mindestens dem Teil des Bandes (51) zugeordnet ist, welcher vom Aufroller (20) am weitesten entfernt ist, und bei dem dessen Teil, in dem Hülle (52) und Band (51) vorhanden sind, sich in einen Brustabschnitt (501) und einen Beckenabschnitt (502) unterteilt, die voneinander durch den Riegel (11) des Gurthschlosses (10) getrennt sind, Befestigungsvorrichtungen (60) zum Verbinden insbesondere eines der Gurtenden mit dem Aufroller (20) und des anderen Gurtendes mit dem Sitz (30) bzw. dem Rahmen (40) und zur Verankerung des Schließelementes des Gurtschlosses in einem dieser letzteren, Druckerzeugungsmittel (70) zum Aufblasen oder zum Entleeren der Hülle (52) und einer Steueeinheit (80) zum Betreiben der Druckerzeugungsmittel (70) umfaßt, derart, daß, wenn der Insasse in seinem Sitz (30) Platz genommen hat, die Steuereinheit (80) die Druckerzeugungsmittel (70) auslöst, so daß die Hülle (52) aufgeblasen und der Gurt (50) entrollt wird, der mit seinem Ausbreiten den Insassen umgibt und den Riegel (11) des Gurtschlosses (10) zum Schließelement (12) desselben lenkt, damit er sich automatisch darin einhängt, und derart, daß, wenn der Riegel (11) und das Schließelement (12) des Gurtschlosses (10) ineinander eingehängt sind, die Steuereinheit (80) die Druckerzeugungsmittel (70) stillsetzt, so daß die Hülle (52) entleert wird, damit der Aufroller (20) den Gurt (50) spannt und ihn an den Insassen anlegt, dadurch gekennzeichnet, daß der direkt am Gurt (50) ausgebildete Riegel (11) mit diesem einen Körper bildet und bei aufgeblasener Hülle (52) des Gurtes (50) einen omegaförmigen Aufbau zeigt, der durch Naht der Hülle (52) erreicht wird.

2. Gurt nach Anspruch 1, dadurch gekennzeichnet, daß die Hülle einen näherungsweise rechteckigen Querschnitt mit zwei sich gegenüberliegenden Wänden (521, 522) aufweist, von denen die eine (522) für eine Orientierung zum Sitz (30) hin vorgesehen ist, daß diese Wände im Längsschnitt verschiedene Längen aufweisen, wobei diejenige (522) der Wände (521, 522), die zum Sitz (30) hin orientiert ist, die kürzere Länge hat, so daß, wenn die Hülle (52) aufgeblasen ist, der Gurt (50) eine beiden Abschnitte (501, 502) gekrümmt und mit einer zum Sitz (30) hin gerichteten Konkavität darbietet.

3. Gurt nach Anspruch 1 oder 2, dadurch gekennzeichnet, daß die Hülle (52) an dem Band (51) angebracht ist.

4. Gurt nach Anspruch 1 oder 2, dadurch gekennzeichnet, daß die Hülle (52) und das Band (51) aus einem Stück sind.

5. Gurt nach irgendeinem der Ansprüche 2 bis 4, dadurch gekennzeichnet, daß der Querschnitt der Hülle (52) ausgehend von dem Ende des Gurtes (50), das am Sitz (30) bzw. am Aufbau (40) befestigt ist, dünner wird.

6. Gurt nach irgendeinem der Ansprüche 1 bis 5, dadurch gekennzeichnet, daß die Hülle (52) an ihrem Ende nahe dem Ende des Gurtes (50), das am Sitz (30) bzw. am Aufbau (40) befestigt ist, mit einem Ansatzstück (523) versehen ist.

7. Gurt nach irgendeinem der Ansprüche 1 bis 6, dadurch gekennzeichnet, daß die Mittel (70) einen elektropneumatischen Kompressor (71), ein Einlaßventil (72), ein Entlastungsventil (73) und eine Rohrleitung (74), die mit der Hülle (52) verbunden ist, umfassen.

8. Gurt nach irgendeinem der Ansprüche 1 bis 7, wobei der Sitz (30) eine Sitzfläche (31), eine Sitzlehne (32) und gegebenenfalls eine Kopfstütze (33) umfaßt, dadurch gekennzeichnet, daß die Steuereinheit (80) zwei piezoempfindliche Meßfühler (81), von denen der eine der Sitzfläche (31) des Sitzes (30) und der andere der Sitzlehne (32) bzw. der Kopfstütze (33) zugeordnet ist und die so gekoppelt sind, daß sie ein logisches UND-Glied bilden, und einen dem Schloß (10) zugeordneten Anschnalldetektor (82) umfaßt.

9. Gurt nach irgendeinem der Ansprüche 1 bis 8, dadurch gekennzeichnet, daß das Schließelement (12) des Schlosses (10) einen Körper (120) umfaßt, der einerseits eine kippbare Fallklinke (124) mit elastischer Rückholung zum Festhalten des der im Schließhaken (12) eingehängten Riegels (11), und einen elastisch rückgeholten Öffnungsknopf (13) trägt, der mit einem einziehbaren Feststeller (132) versehen ist, der mit der Fallklinke (124) zusammenwirkt, um sie in der Position zu halten, in der letztere den im Schließelement (12) eingehängten Riegel (11) festhält.

10. Gurt nach irgendeinem der Ansprüche 1 bis 9, dadurch gekennzeichnet, daß der Aufroller (20) unter anderem eine Trommel (21) zur Aufnahme des Gurtes (50), Stützrollen (22), die im Abstand um die Trommel (21) verteilt sind und den Gurt (50) zwischen sich und der Trommel (21) abstützen, und eine Drückwalze (23) zur elastischen Anlage gegen den Gurt (50) für ein Entfernen des möglicherweise in ihr noch befindlichen Fluids aus der entleerten Hülle (52) vor dem Aufrollen des Gurtes (50) auf der Trommel (21) umfaßt.

11. Gurt nach irgendeinem der Ansprüche 1 bis 10, dadurch gekennzeichnet, daß der Aufroller (20) und das Schließelement (12) des Schlosses (10) am Sitz (30) befestigt sind.

12. Gurt nach irgendeinem der Ansprüche 1 bis 10, dadurch gekennzeichnet, daß der Aufroller (20) und das Schließelement (12) des Schlosses (10) am Aufbau (40) befestigt sind.

13. Gurt nach irgendeinem der Ansprüche 1 bis 10, dadurch gekennzeichnet, daß entweder der Aufroller (20) oder das Schließelement (12) des Schlosses (10) am Sitz (30) befestigt ist, und daß dann das jeweils andere der beiden Teile am Aufbau (40) befestigt ist.

## Claims

1. Inflatable passive seat belt with an automatic winding mechanism (20) and automatic buckling, comprising a buckle (10) with a latch (11) and keeper (12), which is intended to retain an occupant seated on his seat (30) mounted on a structure (40) when the buckle is closed, in which this belt comprises a single strap which is made from a mechanically resistant, flexible band (51) and a fluid-tight, continuous, flexible casing (52), which can be deployed under the pressure of the fluid and is associated with this band (51) over at least the part of the latter furthest from the winding mechanism (20) and whereof this part where the casing (52) and band (51) are present is divided into a thoracic side (501) and an abdominal side (502) separated by the latch (11) of the buckle (10), fastening devices (60) for connecting in particular one of the ends of the strap to the winding mechanism (20) and the other of the ends of the latter to either the seat (30) or structure (40), and for anchoring the keeper of the buckle to one of the latter, pressurising means (70) for inflating or deflating this casing (52) and a control unit (80) for operating these pressurising means (70) in order that, when the occupant has taken his place in his seat (30), the control unit (80) initiates the operation of the pressurising means (70), in order to inflate the casing (52) and unwind the strap (50), which as it is deployed, surrounds the occupant and guides the latch (11) of the buckle (10) towards the keeper (12) of the latter in order that it is engaged automatically therein and in order that, when the latch (11) and the keeper (12) of the buckle (10) are attached one to the other, the control unit (80) stops the operation of the pressurising means (70) in order to deflate the casing (52) in order that the winding mechanism (20) tightens the strap (50) in order to press it against the occupant, which belt is characterised in that the latch (11), formed directly on the strap (50), is integral with the latter and has, when the casing (52) of the strap (50) is inflated, a configuration in the form of an omega obtained by stitching the casing (52).

2. Belt according to Claim 1, characterised in that the casing has an approximately rectangular cross-section with two opposed walls (521, 522) whereof one (522) is intended to be orientated towards the seat (30), in that these walls have different lengths in longitudinal section, the one (522) of these walls (521, 522) orientated towards the seat (30) having the shortest length in order that when the casing (52) is inflated, the strap (50) has its two sides (501, 502) curved inwards and with a concavity which is directed towards the seat (30).

3. Belt according to Claim 1 or 2, characterised in that the casing (52) is attached to the band (51).

4. Belt according to Claim 1 or 2, characterised in that the casing (52) is in one piece with the band (51).

5. Belt according to one of Claims 2 to 4, characterised in that the cross-section of the casing (52) becomes progressively thinner from the end of the strap (50) fastened to either the seat (30) or structure (40).

6. Belt according to one of Claims 1 to 5, characterised in that the casing (52) is provided with a mouthpiece (523) ar its end close to that of the strap (50) fastened to either the seat (30) or structure (40).

7. Belt according to one of Claims 1 to 6, characterised in that the means (70) comprise an electro-pneumatic compressor (71), an inlet valve (72), a discharge valve (73) and a pipe (74) connected to the casing (52).

8. Belt according to one of Claims 1 to 7, in which the seat (30) comprises a squab (31), a back (32) and if necessary a head rest (33), characterised in that the control unit (80) comprises two piezo-sensitive pickups (81) one associated with the squab (31) of the seat (30) and the other with either the back (32) or head rest (33) and connected, in order to form a logic AND-gate, and a buckling detector (82) associated with the buckle (10).

9. Belt according to one of Claims 1 to 8, characterised in that the keeper (12) of the buckle (10) comprises a body (120) supporting, on the one hand, a locking device (124) pivoting with resilient return, intended to keep the latch (11) attached to the keeper (12) and an opening control button (13) with resilient return, provided with a retractable stop (132) cooperating with the locking device (124) for keeping it in the position where the latter keeps the latch (11) attached to the keeper (12).

10. Belt according to one of Claims 1 to 9, characterised in that the winding mechanism (20) comprises, inter alia, a drum (21) for receiving the strap (50), support rollers (22) distributed at a distance around the drum (21) for supporting the strap (50) between them and the drum (21) and a pressing cylinder (23) intended to be pressed resiliently against the strap (50) in order to expel from the deflated casing (52) the fluid which would be located therein before the winding of the strap (50) onto the drum (21).

11. Belt according to one of Claims 1 to 10, characterised in that the winding mechanism (20) and the keeper (12) of the buckle (10) are fixed to the seat (30).

12. Belt according to one of Claims 1 to 10, characterised in that the winding mechanism (20) and the keeper (12) of the buckle (10) are fixed to the structure (40).

13. Belt according to one of Claims 1 to 10, characterised in that either the winding mechanism (20) or keeper (12) of the buckle (10) is fixed to the seat (30) and the other of the latter is fixed to the structure (40).

**10**

FIG.1

FIG.2A

FIG.2B

FIG.3

FIG.7

FIG.4

11

FIG.5A

FIG.5B

EP 0 366 518 B1

FIG.5D

FIG.5C

FIG.6